# EUROPEAN PATENT APPLICATION

(11) **EP 3 738 769 A1**
(43) Date of publication of application: **18.11.2020**
(21) Application number: 20174200.4
(22) Date of filing: 12.05.2020
(51) Int. Cl.: B32B 27/12, A47L 23/00, A47L 23/26, B32B 27/32, B32B 27/34

(54) **CIRCULAR MAT WITH IMPROVED DURABILITY**

(30) Priority: 13.05.2019 BE 201905312
(71) Applicant: MercuryFlooring, 8790 Waregem (BE)
(72) Inventor: DEWINTER, Rik, 8790 WAREGEM (BE)
(74) Representative: Chielens, Kristof

(57) **Abstract**

The present invention relates on the one hand to a circular mat comprising a top layer with yarns or fibres of a synthetic material that are firmly bonded to a bottom layer manufactured from a synthetic material, wherein the melting point of the synthetic material of the top layer is higher than the melting point of the synthetic material of the bottom layer. On the other hand the present invention relates to a method for forming a circular mat, wherein a top layer with yarns or fibres of a synthetic material is firmly bonded to a bottom layer manufactured from a synthetic material.

## Description

The present invention relates on the one hand to a mat comprising a tufted, woven or needled top layer with yarns or fibres of a synthetic material that are firmly bonded to a bottom layer manufactured from a synthetic material. The present invention relates in particular to a mat for application as a dirt-trapping mat, runner, rug or carpet tile which is regularly cleanable and moreover is fully mechanically recyclable.

On the other hand the present invention relates to a method for forming a mat, wherein a top layer with yarns or fibres of a synthetic material is firmly bonded to a bottom layer manufactured from a synthetic material.

The top and bottom layers of traditional products may have different compositions. The top layer may consist of a tufted, woven or needled textile structure in which one or more classical textile yarns are processed, and is assembled from polyamide, polypropylene, polyester or natural fibres or a combination of different synthetic and natural fibres.

The bottom layer is necessary for product cohesion and for fixing the yarn ends to the underside of the top layer, which results in the desired wear resistance (pile strength). One or more partial layers of the bottom layer are often manufactured from crosslinked rubbers/latex or from plasticized polymers based on PVC or PVB in which large amounts of mineral fillers are also usually incorporated. The products with an SBR latex backing age quickly and so have a relatively short life. Broken-off latex usually leaves visible marks on the substrate on which such products are placed.

Products with plasticized polymer layers have other disadvantages. Most plasticizers do not provide the desired pliability at low temperature and may easily migrate out of the polymer matrix, so that the pliability of the plasticized coatings during their use phase may largely be lost. Plasticizers may, moreover, easily be extracted from the polymer matrix with organic solvents and with liquid CO₂. Dirt-trapping mats based on plasticized polymers consequently cannot be washed repeatedly with such cleaning agents without loss of quality.

Mats with one or more bottom layers that are fully cured, e.g. bottom layers based on vulcanized rubbers, 2K polyurethane, can be washed without loss of quality. Owing to their composition, mats of this kind are not mechanically recyclable to thermoplastic, high-grade recycled plastic materials. Rubber mats comminuted to powders or chips may only be incorporated as low-grade fillers in new products.

Owing to the complex composition of the known mats and the chemical incompatibility of the top and bottom layer, scrapped products cannot be comminuted mechanically to fusible and functional recycled materials that are usable in new products. Thus, owing to their complex composition, scrapped mats are usually incinerated (thermal utilization) or landfilled, which is no longer socially justifiable.

WO 2008/026106 describes a non-woven composite material that is used for application in absorbent products such as e.g. nappies, and which consists of an elastic film that is laminated on a non-woven material. To form the composite material, the elastic film is passed through a nip, where the elastic film is joined by melt bonding to a non-woven material. Simultaneously with the melt bonding, apertures with a length from 200 to 5000 micrometres are formed in the elastic film. In this way the elastic film acquires a kind of micro-net structure that is only joined to the non-woven material at the level of the apertures. The elastic film, which is stretched prior to bonding, is manufactured from a thermoplastic (elastic) polymer and has a thickness from 1 to 100 micrometres. The method described in WO 2008/026106 is not suitable for forming a mat.

The aim of the present invention is to provide a mat, in particular a dirt-trapping mat, wherein the bottom layer and the top layer thereof have a composition such that at the end of their life they are fully mechanically recyclable to thermoplastic recycled materials. Moreover, it should be possible to clean the mat regularly, preferably by so-called CO₂ cleaning, without any loss of quality.

The aim of the invention is achieved by providing a mat comprising a tufted, woven or needled top layer with yarns or fibres of a synthetic material that are firmly bonded to a bottom layer with a thickness between 0.2 and 4 mm and that is manufactured from a synthetic material, wherein the synthetic material of the top layer and the synthetic material of the bottom layer belong to the same polymer class , the melting point of the synthetic material of the top layer is higher than the melting point of the synthetic material of the bottom layer, and wherein the difference in melting point between the material of the top and bottom layer is at least 10°. Preferably the difference in melting point between the material of the top and bottom layer is 20 to 40°C. Because the synthetic material of the top layer and the synthetic material of the bottom layer belong to the same polymer class, the material of the top layer and the material of the bottom layer are fully chemically compatible with each other.

The mat according to the present invention is fully mechanically recyclable and free from harmful substances, such as plasticizers. The mat is in addition perfectly cleanable with environmentally friendly cleaning agents, such as e.g. liquid CO₂. Said mat is preferably a mat for application as dirt-trapping mat, runner, rug or carpet tile.

In preferred embodiments of the mat according to the invention the aforementioned synthetic materials of the top and bottom layer are thermoplastics belonging to the same polymer class. More particularly, the synthetic materials of the top and bottom layer have a plastics composition based on polyolefins, polyamides or polyesters. The bottom layer of a mat according to the invention will always be made with the same polymers as those that are used in the top layer, but will also comprise copolymers of the same polymer class that have a lower melting point.

In a more preferred embodiment of the mat according to the invention, the synthetic materials of the top and bottom layer have melt indices determined at a temperature of 190°C that differ from one another by less than 10%. This has the advantage that the synthetic materials of the top and bottom layer display a similar melting behaviour after recycling, which makes it possible to use recycled materials made from scrapped mats in new thermoplastic products.

In a more particular embodiment of the mat according to the invention, the top layer of which consists of polypropylene yarns or fibres, the bottom layer also comprises polyolefin elastomers (POE) and/or olefin block copolymers (OBC), besides polypropylene. Preferably the bottom layer comprises at least 5%, more particularly 10 to 30%, of polyolefin elastomers and/or olefin block copolymers.

More preferably, the bottom layer of the mat comprises 25% to 80% of mineral fillers, preferably the bottom layer comprises 50% to 75% of mineral fillers. The polypropylene polymer that is combined in the bottom layer with POE or OBC may be either a virgin polymer or a PP recycled material but with a melting behaviour similar to that of the POE or OBC polymer.

In an alternative embodiment of the mat according to the invention, the synthetic material of the top and bottom layer is a plastics composition based on a polyamide material.

Preferably the bottom layer of a polyamide mat is formed from a mixture of polyamide (PA) and polyamide elastomers (PA-E) in a PA/PA-E ratio that is between 97/3 and 70/30. More especially, the PA/PA-E ratio is between 95/5 and 85/15. With these ratios, a compact bottom layer may be obtained that is sufficiently resilient and elastic. The elastomers have much lower melting points than the conventional PA6 (220°C) that is used in the production of PA6 carpet yarns. However, besides PA elastomers, it is also possible to add co-polyamides to provide some control of the melting range. These co-polyamides do not give any additional elasticity of the layer.

The great advantage of using PA yarns in the mat is the dyeability and/or printability with dyes of these PA yarns on the one hand and their great elasticity. Owing to the great elasticity, mats or carpets based on polyamide are extremely suitable as floor covering that is walked on and cleaned frequently. As a result, PA mats or carpets, which are of course more expensive than carpets based on PP, PET, viscose, etc., are used in particular in the contract market (hotels, restaurants, hospitals, public places) and in the floor covering of various means of transport (cars, trains, aircraft, boats, etc.).

In yet another alternative embodiment of the mat according to the invention, the synthetic material of the top and bottom layer is a plastics composition based on a polyester material. The bottom layer of such a mat also contains a co-polyester besides polyester. With such a combination, the melting point of the polyester/co-polyester combination is at least 10°C lower than the melting point of the polyester yarns that are used in the top layer.

According to a particular embodiment of the mat according to the invention, said mat comprises 0% of volatile organic substances (VOCs). More particularly, said mat comprises 0% of plasticizers.

In a preferred embodiment, the bottom layer comprises one or more layers that are bonded together by means of a co-extrusion process. The different co-extruded layers may have a different polymer/copolymer ratio and optionally a different content of mineral fillers and/or functional additives that provide specific functionalities such as antistatic behaviour or fire resistance.

In an advantageous embodiment of the mat according to the invention, the bottom layer and the top layer of the mat are bonded together by means of a lamination process. The top and bottom layer are preferably bonded together in such a way that they are fully bonded together in their joint surface.

In an especially advantageous embodiment of the mat according to the invention, on its underside the mat comprises a finishing layer that is provided against the bottom layer. By providing the mat with a finishing layer on its underside, a double-sided mat is formed. The finishing layer may on the one hand be a tufted, woven or needled structure. On the other hand, the finishing layer may also be a non-woven structure. Among other things, a non-woven structure ensures less slip. For recyclability, the finishing layer is manufactured from the same material as the top and bottom layer.

In practice, the top and the bottom layer have the same shape and dimensions, so that the perimeter of the top layer is identical to that of the bottom layer. In an alternative preferred embodiment, the perimeter of the bottom layer is greater than the perimeter of the top layer, so that a mat with a border is formed; preferably said border has a width between 0.1 and 5 cm. In the case of a mat with a border, the area of the bottom layer is greater than the area of the top layer.

The present invention further relates to a method for forming a mat, wherein a tufted, woven or needled top layer with yarns or fibres of a synthetic material is firmly bonded to a bottom layer manufactured from a synthetic material, wherein the method comprises the following steps:
- forming the top layer and the bottom layer separately, from a synthetic material wherein the melting point of the synthetic material of the top layer is higher than the melting point of the synthetic material of the bottom layer;
- bonding the top and bottom layer by means of a thermal lamination process at a temperature that is at least 10°C lower than the melting point of the polymers that are used in the top layer; and
- then, from the bonded top and bottom layer, punching or cutting a shape in order to obtain the mat.

Cutting will preferably be an ultrasonic cutting process. The punching or cutting waste that arises in the production of the mats is recyclable to material that may be used in the process for extrusion of the bottom layer.

The form of mat depends on the fit or shape used; the mat may thus have any shape: circular, oval, rectangular, polygonal, etc. The areas of the top and bottom layer may be identical. However, the areas of the top and bottom layer may also be different; thus, in a preferred embodiment, the area of the bottom layer is greater than the area of the top layer. Therefore it is possible to form a mat with a border. The width of the border is then preferably between 0.1 and 5 cm.

The top and bottom layers are combined and attached to each other by a (controlled) thermal lamination process, wherein the bottom and the top layer are pressed together. Preferably the pressure applied during the lamination process is kept to a minimum, in particular max. 0.3 kg/cm². This is so that the structure of the top layer is not definitively crushed or deformed. Lamination may take place during or after the (co)extrusion process that is used for forming the bottom layer. The lamination temperature is at least 10°C, preferably 20°C to 40°C, below the melting point of the yarns or fibres that are used in the top layer. Preferably, yarns or fibres of PP are used in the top layer. The lamination temperature is preferably also (just) above the melting point of the (co)polymers present in the bottom layer, so that the melted-on polymers on the outside surface of the bottom layer during compression can penetrate sufficiently into the lower part of the top layer, thereby fixing the ends of the yarns or fibres. This is necessary so as to have sufficient pile strength. To facilitate penetration of the polymers of the bottom layer into the top layer, the melt flow index (MFI) of the (co)polymers of the bottom layer will be between 1 and 30 g/10 min, preferably between 15 and 25 g/10 min. After penetration, the whole is cooled.

In a special embodiment of the method according to the invention, the extruded bottom layer may not only be joined to the top layer but also to an additional (finishing) layer, so that during the lamination process the extruded bottom layer is placed between the top layer and an additional finishing layer. In this way, a sandwich structure or two-sided mat is produced, with a textile structure on the upper side and the underside. This additional finishing layer that is provided against the underside of the bottom layer (which becomes the middle layer) consists of the same fibre material as that used in the top layer and may also be a woven, tufted or needlefelt carpet. The extruded middle layer provides the cohesion of the sandwich structure and fixing of the fibres/yarns of the top layer and finishing layer. The structure and the colour of the top layer and of the finishing layer may of course be different, but they still have the same chemical composition.

The method according to the invention is provided in particular for forming a mat according to the invention and as defined in this patent text.

Instead of a mat, the technology described above may also relate to another carpet structure such as a kitchen runner, a rug or a carpet tile.

The present invention is now explained in more detail on the basis of the following detailed description of some embodiments of a mat according to the present invention. The purpose of this description and of these examples is exclusively to give an explanation and to present further advantages and features of these mats according to the invention, and so they are by no means to be interpreted as a limitation of the field of application of the invention or of the patent rights claimed in the claims.

In the context of the circular economy, there is increasing demand for recyclable and durable products. In order to make dirt-trapping mats, runners, rugs and carpet tiles "circular" and durable, these products must be assembled and produced in some other way than has been known to date, while retaining the essential product properties both during intensive use and periodic maintenance (vacuum cleaning or washing). The products manufactured according to the present invention are free from harmful substances, and may moreover be cleaned with environmentally friendly cleaning agents such as liquid CO₂, and when discarded are fully recyclable to thermoplastic recycled materials.

For the required functionalities, the mats or carpets according to the present invention also have a layered structure, consisting of a tufted, woven or needled textile top layer (carpet structure) and a soft, compact or foamed bottom layer (also called backing). The two layers are bonded together by a lamination process, as explained hereunder.

In a special embodiment, both on the upper side and on the underside, the plastic bottom layer may be laminated with a carpet structure, so that a sandwich structure is produced. Sandwich mats of this kind may be used on both sides as a dirt-trapping mat. In these sandwich mats, both textile layers consist of fibres or yarns with the same chemical composition and an identical melting range.

The top layer and the bottom layer of the laminated products have different functions. The top layer provides walking comfort, resilience, dirt trapping, absorption of fine material, and decoration. The bottom layer provides the cohesion of the whole product, softness and pliability, lying flat and being slip-proof on a cold or a warm substrate, and depending on the additives used, provides additional functionalities such as fire resistance, electrical conduction, antistatic behaviour, acoustic insulation, etc.

PO-based "circular and durable" dirt-trapping mats, runners, rugs and carpet tiles have the following characterizing features: (a) fully thermoplastic character and very good mutual chemical compatibility of both layers, (b) low density (below 0.92) of the polymers and copolymers used, which belong to the polyolefin class, and (c) complete absence of added substances that could be released by migration or by evaporation. These specific features guarantee good recyclability and usability (= circularity) both of production waste and of scrapped EOL products, low transport costs (because of low weight), retention of good flexibility and slip-proof character both at high and low temperatures (owing to the elastic, anti-slip character of the bottom layer) so that these products can always be laid flat and remain slip-proof over a wide temperature range (from -20°C to + 50°C) (which may prevent accidents), retention of fine material and dirt during use (in connection with the pile structure of the top layer), cleanability with liquid CO₂ and preservation of quality in repeated cleaning and washing.

Both the top layer and the bottom layer of the mats are prepared by separate production processes and may each optionally consist per se of several layers, characteristic of the production process used. A tufted textile that forms the top layer consists for example of a yarn structure and a primary backing. The bottom layer is prepared by a (co)extrusion process (cast film or flexible plate extrusion) and may possibly consist of several layers, whether or not with the same composition. The total thickness of the bottom layer is between 0.2 mm and 4 mm, preferably between 1.5 mm and 2.5 mm, more particularly between 1 mm and 2 mm. Both the bottom layer and the top layer of a PO mat consist of polyolefin polymers and/or copolymers that are mutually fully chemically compatible, without adding compatibilizers.

Owing to the specific chemical composition of the (co)polymers that are used in the bottom layer, the top layer of a PP mat may consist only of classical polypropylene textile fibres / yarns. However, this restriction to polyolefin products is not a disadvantage, as the PO composition of the products has a number of advantages. Because the polymers belong to the polyolefin class, it is possible to produce lightweight (very low density), affordable (polyolefins are the most produced polymers and so are very inexpensive), high-performance (all desired functions may be fulfilled) finished products which, in contrast to the existing products, are easily recyclable to recycled materials that are usable in several PP products.

The top layer and the bottom layer are assembled and attached to one another by a controlled lamination process, wherein the minimum pressure is maintained (max. 0.3 kg/cm²), in order to avoid definitively crushing or deforming the yarn-pile structure. Lamination may take place during or after the (co)extrusion process. The lamination temperature is at least 10°C, preferably 20° to 40°C, below the melting point of the PP yarns / fibres that are used in the textile top layer, but just above the melting point of the (co)polymers present in the bottom layer, so that the melted-on polymers on the outside surface of the bottom layer may penetrate sufficiently into the lower part of the top layer during compression to fix the ends of the yarns or fibres (required in order to have sufficient pile strength). To facilitate penetration of the polymers of the bottom layer into the top layer, the melt flow index (MFI) of the (co)polymers of the bottom layer will be between 1 and 30g/10 min, preferably between 15 and 25. After penetration, the whole is cooled. During the extrusion and/or lamination process, the underside of the bottom layer may optionally be thermally embossed. After lamination, the mats are punched out, or cut out mechanically or ultrasonically. During cutting out, mats may also be formed that are edged with the extruded bottom layer.

The top layer and the bottom layer of the circular and durable products, preferably the mats, consist of PP homopolymers, POEs (PO elastomers), olefin block copolymers (OBCs) and/or a combination. However, the two layers have a different melting point but in the molten state are mutually completely chemically compatible. The melting point of the PO (co)polymers of the top layer is at least 10°C, preferably 20 to 40°C higher than those present in the bottom layer. In the molten state, the melt viscosities of both layers are very close to each other, which again makes it possible to use PO polymers and PO (co)polymers after recycling of scrapped laminated products.

The polymer matrix, consisting of polymers and/or copolymers belonging to the polyolefin class, may optionally also comprise mineral fillers, glass fibres or special additives such as fire retardants, dyes, carbon black, etc., but certainly no plasticizers or volatile additives that may migrate or evaporate from the polymer matrix.

The specific chemical composition of the bottom layer ensures that the laminated products (a) are resistant to hydrolysis, (b) are almost or completely unaffected by microorganisms, (c) remain flexible down to -20°C and (d) can always be laid flat and are slip-proof on both hard and soft floor coverings.

Through total absence of plasticizers and other volatile substances, these new products contribute to a good interior climate (no VOC emissions) and they are also washable with a conventional washing process or cleanable with liquid CO₂, without loss of flexibility.

Because the layered products are not chemically crosslinked (no crosslinks between the polymer chains), they fully preserve their thermoplastic behaviour. Therefore the scrapped products, like all thermoplastics, may be comminuted mechanically to fusible PO recycled material powders, particles or granules, which once again can be reused, by means of a (co)extrusion process, in new bottom layers.

This new development became possible through the development of new polyolefin-based polymers and copolymers which clearly improve the elasticity of classical PP polymers, without forming molecular bridges between individual polymer chains. Owing to the lower melting point of the copolymers, the bottom layer can be laminated against the top layer without problems, and without loss of quality of the whole upper structure. The presence of POEs (polyolefin elastomers) and/or OBCs (olefin block copolymers) in the bottom layer is important for achieving the desired functionalities (cold flexibility, flat and slip-proof character, recyclability, washability). The bottom layer must comprise at least 5% POE and/or OBC, preferably 10 to 30%.

The use of metallocene catalyst systems during the polymerization process allows very fine control of the spatial microstructure, tacticity, co-monomer distribution, molecular weight and molecular weight distribution, linearity and branchings of the copolymers formed. The PO-based thermoplastic polymers (POE and OBC) that are formed during the polymerization process provide controllable elasticity, which is much more difficult to achieve with conventional polymer blends / alloys.

The POEs and OBCs may also be processed together with various virgin and post-consumer polyolefins such as conventional PP, HDPE, LDPE and LLDPE. The PO compounds of POE and/or OBC with conventional PO may in addition incorporate a great many mineral fillers and various additives. This creates many possibilities for modifying the cost price of the finished products as a function of specific customers or markets.

Thermoplastic elastomers and block copolymers are recyclable like conventional thermoplastics, and the reuse of recycled materials causes no problems in principle. A number of polymer manufacturers such as DOW, ExxonMobile, LG, and Borealis offer a wide range of said polymeric elastomers with different melt viscosities.

When selecting elastic components (POE, OBC), the virgin or post-consumer polyolefins, the fillers and the functional additives that are used for preparing compounds that are used for the production of new extruded bottom layers it is of course necessary to take into account the specific characteristics of the various components, such as melt index, melting point, mechanical properties, etc.

As already stated, the bottom layer itself may consist of several layers. Using co-extrusion, it is possible to prepare layered films wherein each layer in the film has a slightly different composition with a different functionality, melting point or melt viscosity. These multilayer films may facilitate the lamination and/or embossing process.

Instead of using a plastics composition based on a polyolefin material for the synthetic material of the top and bottom layer, it is also possible to use polyamides in the top and bottom layer for forming a mat or carpet that is fully recyclable.

A traditional PA carpet or mat always has a layered structure consisting of a top layer and a bottom layer. The top layer is usually a tufted textile structure in which PA yarns are incorporated. The bottom layer consists of a polymer layer in which optionally a back cloth or a needlefelt may also be laminated.

PA yarns have the great advantage of dyeability and/or printability with dyes of these yarns on the one hand, and the high elasticity (resilience) of PA carpets (mats) on the other hand. Owing to this great resilience, carpets or mats based on polyamide are extremely suitable as floor covering that is walked on and cleaned very frequently. Therefore PA carpets, which are undoubtedly more expensive than carpets based on PP, PET, viscose, etc., are mainly used in the contract market (hotels, restaurants, hospitals, public places) and in the floor covering of various means of transport (cars, trains, aircraft, boats, etc.).

The bottom layer, also called backing, is required for firmly attaching the yarns of the upper structure at the bottom of the primary backing so that the carpet has the desired pile strength and the necessary cohesion. For the yarns of the upper structure to be attached sufficiently firmly, the polymer must also be able to penetrate between and into the yarns on the underside of the primary backing.

Until now, the backing has been applied by a coating process, wherein semi-viscous or solid (powder) polymer systems are used. Widely used semi-viscous polymer systems are foamed latices (SBR latex, acrylates, etc.), PVC-plastisol systems (PVC and plasticizer), PVB systems (plasticizer and PVB), 2K-polyurethane systems or bitumen. Low-melting polymer powders (such as EVA, EVAc, co-polyamides, copolyesters, etc.) may also be incorporated, and are sprinkled by a sprinkling system on the underside of a tufted carpet and are melted-on by means of a heating system (hot air, IR). Optionally, an additional backing fabric may also be pressed into the viscous or molten coating mass. The (multilayer) bottom layer is fixed with the tufted yarns on the back of the primary backing and is secured either by reaction (rubber systems, polyurethanes), gelation (PVC) or cooling (molten powders). The coating systems may or may not comprise fillers and/or other additives in order to lower the cost price and/or to obtain specific properties (fire resistance, etc.).

Owing to the complex composition of a traditional PA carpet or mat, the lack of chemical compatibility of the top and bottom layer, the thermoset character of various bottom layer systems (rubber, PUR), and the possible presence of migrating or volatile plasticizers (PVC, PVB backing, bitumen), until now there has been little if any mechanical or chemical recycling of scrapped PA carpets or mats as raw material, and quite often they are incinerated or landfilled. This is disadvantageous as PA is a relatively expensive polymer that can be used not only in carpet manufacture but also in various industrial applications.

In the context of the circular economy, the social demand for circular products that are recyclable is of course increasing. For various PA6 textile materials (fishing nets, production waste, residual yarns, trimmed PA carpet pile, etc.) that do not comprise any other polymers, in Europe a chemical recycling route has been developed by Aquafil (It), wherein PA6 is polymerized to caprolactam, which then in its turn may be polymerized to new PA yarns. These Econyl yarns are also used successfully in new carpets. For scrapped PA carpet tiles, new possibilities are being sought for separating the top and bottom layer more easily. However, industrial success has not yet been achieved.

Instead of separating the top and bottom layer, the present invention provides a solution for constructing the complete fabric structure (top and bottom layer) from thermoplastic PA material that is completely compatible and can be processed together (recycled) into new products.

The great challenge here was to produce a compatible PA bottom layer that can also be fixed sufficiently by the PA yarns at the bottom of the primary backing of the top layer, without disturbing the resilience of the upper pile structure or adversely affecting the appearance of the carpet structure. Moreover, the carpet, built up entirely from virgin or recycled PA materials, must be rollable and it must be possible to lay it flat on various substrates, both at a cold and a hot ambient temperature (between -20°C and + 60°C). Concretely, this means that the bottom layer must be sufficiently flexible and preferably also has a resilient character.

The solution to this problem is to stop producing such mats or carpets by the known coating processes that are used, but to produce the bottom layer separately by a (co)extrusion process and join the (co)extruded bottom layer and the tufted PA carpet together in a controlled manner by a thermal lamination process wherein the pressing force during thermal lamination is kept extremely low (pressure below 0.3 kg/cm²) and wherein the lamination temperature is at least 10°C, but preferably 20 to 30°C below the melting point of conventional PA carpet yarns.

Uncoupling the (co)extrusion process for the production of the bottom layer and the lamination process for joining the top and bottom layer together and fixing the yarns or fibres in the top layer has advantages, which by no means signifies that both processes cannot take place continuously in line. By carrying out the (co)extrusion process separately at higher temperatures, the bottom layer can be produced faster and more efficiently. However, the lamination process by which the bottom layer and the top layer are joined together must take place within narrow temperature limits. Laminating at a lower melting point than that of the PA yarns prevents the PA yarns on the upper side of the carpet being (partially) melted or thermally pressed and deformed.

Of course, this assumes an extruded PA bottom layer that is fusible completely or partially at a lower temperature and can release sufficient melt material to bind and fix the PA yarns on the bottom of the primary backing (providing the required pile strength).

By producing the bottom layer separately, we can use special compounds. These compounds consist of PA6 and PA elastomers (polyether block amide - Pebax Arkema) mixed in a PA/PA-E ratio that is between 97/3 and 70/30, preferably between 95/5 and 85/15, to obtain a compact bottom layer that is resilient and elastic. The elastomers have much lower melting points than that of conventional PA6 (220°C) that is used in the production of PA6 carpet yarns. However, besides PA elastomers, co-polyamides may also be added for some control of the melting range.

The bottom layer itself may be built up from several layers wherein both the thickness and the specific composition per layer may differ. The uppermost layer of the bottom layer, which during the lamination process must form sufficient melt to fix the PA yarns to the bottom of the primary backing, will preferably comprise more PA elastomer and optionally co-polyamides and so have a lower melting point. The thickness of the upper side of the bottom layer, which to a very great extent is converted to melt for fixing the PA yarns, may be applied as a function of the tuft density and the yarn numbers used. A co-extruded bottom layer also has the advantage that the use of the very expensive PA elastomers may remain limited and yet provide sufficient process reliability. Addition of optional fillers and other additives may of course be different per layer. The co-extrusion process, in contrast to powder coating, is very precise and also allows a layered bottom layer to be obtained with the desired properties.

## Claims

1. Mat comprising a tufted, woven or needled top layer with yarns or fibres of a synthetic material that are firmly bonded to a bottom layer with a thickness between 0.2 and 4 mm and that is manufactured from a synthetic material, **characterized in that** the synthetic material of the top layer and the synthetic material of the bottom layer belong to the same polymer class, the melting point of the synthetic material of the top layer is higher than the melting point of the synthetic material of the bottom layer, wherein the difference in melting point between the material of the top and bottom layer is at least 10°.

2. Mat according to Claim 1, **characterized in that** said synthetic material of the top and bottom layer is a thermoplastic material.

3. Mat according to Claim 1 or 2, **characterized in that** the synthetic material of the top and bottom layer is a plastics composition based on a polyolefin material.

4. Mat according to Claim 3, **characterized in that** the polyolefin is a polypropylene polymer, a copolymer of this polypropylene polymer or a mixture thereof.

5. Mat according to one of the preceding claims, **characterized in that** the melt indices of the top layer and bottom layer differ from each other by at most 10%.

6. Mat according to one of the preceding claims, **characterized in that** the bottom layer comprises polyolefin elastomers and/or olefin block copolymers, preferably the bottom layer comprises at least 5% of polyolefin elastomers and/or olefin block copolymers.

7. Mat according to one of the preceding claims, **characterized in that** the bottom layer comprises 25% to 80% of mineral fillers, preferably the bottom layer comprises 50% to 75% of mineral fillers.

8. Mat according to one of Claims 1 or 2, **characterized in that** the synthetic material of the top and bottom layer is a plastics composition based on a polyamide material.

9. Mat according to Claim 8, **characterized in that** the bottom layer is formed from a mixture of polyamide (PA) and polyamide elastomers (PA-E) in a PA/PA-E ratio that is between 97/3 and 70/30.

10. Mat according to one of the preceding claims, **characterized in that** said mat comprises 0% of volatile organic substances (VOCs).

11. Mat according to one of the preceding claims, **characterized in that** said mat comprises 0% of plasticizers.

12. Mat according to one of the preceding claims, **characterized in that** the bottom layer comprises one or more layers that are bonded together by means of a co-extrusion process.

13. Mat according to one of the preceding claims, **characterized in that** the bottom layer and the top layer are bonded together by means of a lamination process.

14. Mat according to one of the preceding claims, **characterized in that** said mat is a mat for application as a dirt-trapping mat, runner, rug or carpet tile.

15. Mat according to one of the preceding claims, **characterized in that** on its underside the mat comprises a finishing layer that is provided against the bottom layer.

16. Mat according to one of the preceding claims, **characterized in that** the perimeter of the bottom layer is greater than the perimeter of the top layer so that a mat with a border is formed, preferably said border has a width between 0.1 and 5 cm.

17. Method for forming a mat, wherein a tufted, woven or needled top layer with yarns or fibres of a synthetic material is firmly bonded to a bottom layer manufactured from a synthetic material, **characterized in that** the method comprises the following steps:
- forming the top layer and the bottom layer separately, from a synthetic material wherein the melting point of the synthetic material of the top layer is higher than the melting point of the synthetic material of the bottom layer;
- bonding the top and bottom layer by means of a thermal lamination process at a temperature that is at least 10°C lower than the melting point of the polymers that are used in the top layer; and
- then, from the bonded top and bottom layer, punching or cutting a shape in order to obtain the mat.
